# EUROPEAN PATENT SPECIFICATION

(11) **EP 4 102 891 B1**
(45) Date of publication and mention of the grant of the patent: **10.09.2025**
(21) Application number: 22176678.5
(22) Date of filing: 01.06.2022
(51) Int. Cl.: H04W 36/38, H04W 36/18, H04W 36/00

(54) **OPTIMIZED HANDOVER TO ACHIEVE USER-PLANE ZERO OUTAGE WITH CARRIER AGGREGATION (CA) OR DUAL CONNECTIVITY (DC) DEPLOYMENT**
OPTIMIERTES WEITERREICHEN ZUM ERREICHEN VON NULL AUSFÄLLE BEI DER BENUTZEREBENE BEIM TRÄGERAGGREGATIONS- (CA) ODER DUAL-KONNEKTIVITÄTS- (DC) KOMMUNIKATION
TRANSFERT OPTIMISÉ POUR ATTEINDRE ZÉRO PANNE DE PLAN D'UTILISATEUR AVEC LE DÉPLOIEMENT D'UNE AGRÉGATION DE PORTEUSES (CA) OU UNE DOUBLE CONNECTIVITÉ (CC)

(30) Priority: 07.06.2021 US 202163197681 P
(43) Date of publication of application: 14.12.2022
(73) Proprietor: Nokia Technologies Oy, 02610 Espoo (FI)
(72) Inventor: LI, Zexian, Espoo (FI); AWADA, Ahmad, Munich (DE); KUO, Ping-Heng, London (GB); LADDU, Keeth Saliya Jayasinghe, Espoo (FI)
(74) Representative: Swindell & Pearson Limited

(56) References cited:
- US-A1- 2016 286 449
- QUALCOMM INCORPORATED: "NR 0ms Interruption HO", vol. RAN WG2, no. Athens, Greece; 20180226 - 20180302, 16 February 2018 (2018-02-16), XP051400685, Retrieved from the Internet <URL:http://www.3gpp.org/ftp/tsg%5Fran/WG2%5FRL2/TSGR2%5F101/Docs/> [retrieved on 20180216]
- ZTE: "Discussion on NR Mobility Enhancements in Physical Layer", vol. RAN WG1, no. Reno, USA; 20191118 - 20191122, 9 November 2019 (2019-11-09), XP051823156, Retrieved from the Internet <URL:https://ftp.3gpp.org/tsg_ran/WG1_RL1/TSGR1_99/Docs/R1-1911975.zip R1-1911975_Discussion on NR Mobility Enhancements in Physical Layer.docx> [retrieved on 20191109]
- HUAWEI ET AL: "Physical layer aspects for NR mobility enhancements", vol. RAN WG1, no. Prague, Czech Republic; 20190826 - 20190830, 17 August 2019 (2019-08-17), XP051764698, Retrieved from the Internet <URL:http://www.3gpp.org/ftp/tsg_ran/WG1_RL1/TSGR1_98/Docs/R1-1908075.zip> [retrieved on 20190817]
- HUAWEI ET AL: "DC based scheme for 0ms interruption handover", vol. RAN WG2, no. Athens, Greece; 20190225 - 20190301, 15 February 2019 (2019-02-15), XP051602082, Retrieved from the Internet <URL:http://www.3gpp.org/ftp/tsg%5Fran/WG2%5FRL2/TSGR2%5F105/Docs/R2%2D1900705%2Ezip> [retrieved on 20190215]
- NOKIA ET AL: "Dual connected intra-frequency handover for 0 ms interruption and mobility robustness", vol. RAN WG2, no. Athens, Greece; 20180226 - 20180302, 16 February 2018 (2018-02-16), XP051400477, Retrieved from the Internet <URL:http://www.3gpp.org/ftp/tsg%5Fran/WG2%5FRL2/TSGR2%5F101/Docs/> [retrieved on 20180216]
- HUAWEI ET AL: "Comparison of DC-based and non-DC-based handover solution", vol. RAN WG2, no. Xi'an, China; 20190408 - 20190412, 6 April 2019 (2019-04-06), XP051700907, Retrieved from the Internet <URL:http://www.3gpp.org/ftp/Meetings%5F3GPP%5FSYNC/RAN2/Docs/R2%2D1903564%2Ezip> [retrieved on 20190406]

## Description

### FIELD:

Some example embodiments may generally relate to communications including mobile or wireless telecommunication systems, such as Long Term Evolution (LTE) or fifth generation (5G) radio access technology or new radio (NR) access technology, or other communications systems. For example, certain example embodiments may generally relate to systems and/or methods for optimized handover to achieve user-plane zero outage with carrier aggregation (CA) deployment or, while not encompassed by the wording of the claims, dual connectivity (DC) deployment.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio.

R2-1803662, NR 0ms Interruption HO, Qualcomm Incorporated provides observations on how dual connectivity-based procedures can be used to enable 0 ms interruption handover. The procedures can include: adding the target gNB as a secondary node; maintaining a connection between the user equipment and the source gNB, acting as a master node, while the user equipment is establishing a connection with the target gNB; once the dual connectivity is established, switching the roles so that the target gNB acts as the master node; and then releasing the connection to the source gNB, now acting as a secondary node.

R1-1911975, Discussion on NR Mobility Enhancements in Physical Layer, ZTE, as well as R1-1908075, Physical layer aspects for NR mobility enhancement, Huawei, HiSilicon, are also relevant prior art for the following disclosure.

### SUMMARY

The invention is set out in the appended independent claims.

Further embodiments are set out in the appended dependent claims.

### BRIEF DESCRIPTION OF THE DRAWINGS:

For proper understanding of example embodiments, reference should be made to the accompanying drawings, wherein:
Fig. 1A illustrates an example diagram of data transmission with carrier aggregation (CA);
Fig. 1B illustrates an example diagram of data transmission with dual connectivity (DC);
Fig. 2 illustrates an example protocol for uplink (UL) dual active protocol stack (DAPS) operation;
Fig. 3 illustrates an example signaling diagram for primary cell handover (HO) in a case with CA;
Fig. 4 illustrates one example before and during primary cell HO phase;
Fig. 5 illustrates an example signaling diagram for primary cell HO in a case with DC;
Fig. 6A illustrates an example flow diagram of a method;
Fig. 6B illustrates an example flow diagram of a method;
Fig. 6C illustrates an example flow diagram of a method;
Fig. 7A illustrates an example block diagram of an apparatus;
Fig. 7B illustrates an example block diagram of an apparatus; and
Fig. 7C illustrates an example block diagram of an apparatus.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for optimized handover to achieve user-plane zero outage, e.g., with carrier aggregation (CA) or dual connectivity (DC) deployment, is not intended to limit the scope of certain embodiments but is representative of selected example embodiments. Embodiments for optimized handover to achieve user-plane zero outage with DC deployment are not encompassed by the wording of the claims.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Efficient support of various IIoT/URLLC use cases has been one of the important areas in 3GPP RAN since the very first release of 3GPP New Radio (NR). Until Release-17, the main focus has been on small data packet with very stringent latency and reliability requirements. Recently, there have been IIoT use cases identified, such as video, imaging and audio for professional applications (VIAPA), with similar latency/reliability requirements but requiring higher data rates. For this reason, supporting high data rate URLLC with frequency range 2 (FR2) is receiving more interest due to the wider available spectrum.

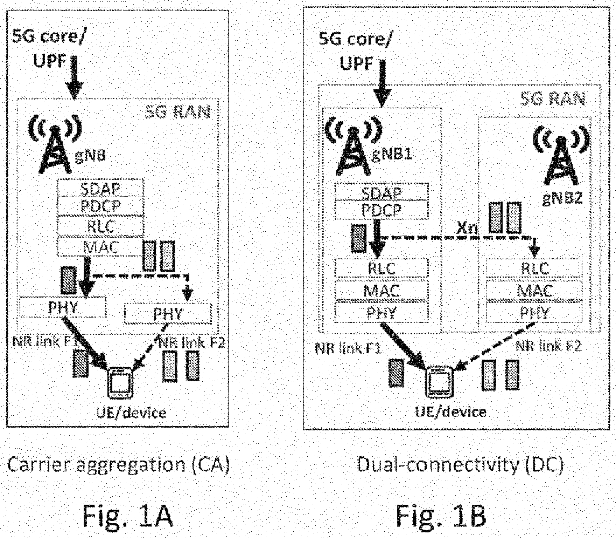

One potential area when considering FR2 URLLC support is the joint operation of frequency range 1 (FR1) and FR2 with the intention of leveraging the best sides from both frequency ranges, for example, more reliable communication with FR1 due to better propagation condition and more available bandwidth in FR2. Similar to other inter-band operation, when talking about joint FR1 and FR2 operation, the operation mode can be either carrier aggregation (CA) or dual connectivity (DC) as shown in the example of Fig. 1. More specifically, Fig. 1A illustrates an example diagram of data transmission with CA, and Fig. 1B illustrates an example diagram of data transmission with DC.

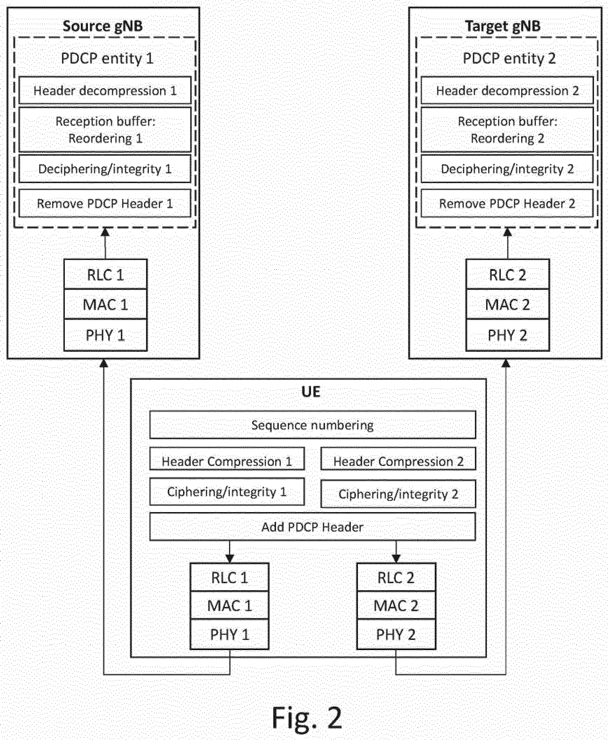

Another import aspect for URLLC operation is handover (HO), and efficient handover support has been one of the main topics in 3GPP NR. In Release-16, conditional handover (CHO) and dual active protocol stack (DAPS) have been specified as mobility enhancements for NR and LTE. CHO improves mobility robustness, whereas DAPS handover reduces the HO interruption time compared to the baseline handover scheme of NR Release-15. Fig. 2 illustrates an example protocol for uplink (UL) DAPS operation. For example, in a case with DAPS, such as the example protocol layers shown in Fig. 2, up to 2 ms interruption time in downlink (DL) can be achieved due to simultaneous reception from the source and target cells.

In DAPS, the UE performs an UL switch from the source cell to the target cell when the random access is successfully completed. That is, after the UL switch, the UE starts to send new packet data convergence protocol (PDCP) service data units (SDUs) and the PDCP SDUs for which the successful delivery have not been confirmed by lower layers to the target cell. However, all other UL transmissions towards the source cell (e.g., hybrid automatic repeat request (HARQ) and radio link control (RLC) retransmissions, HARQ feedback, RLC/PDCP status report, channel state information (CSI) measurements, etc.) are continued. Although the target cell receives the new PDCP SDUs from the UE, the target cell cannot send them to user plane function (UPF) before it sends a "handover success" message and receives the final "SN status transfer message" which leads to end-2-end UL interruption by at least ~15-20 ms.

So-called zero outage is an important objective for many vertical use cases, such as for "train traffic control" where the cellular system is deployed to deliver the important traffic control signalling to trains. Zero outage clearly implies that service interruption is intolerable even in case of handover.

Considering joint FR1 and FR2 operation, according to the latest specified HO procedure, in cases with CA, the UE would release all the component carriers (CCs) when executing a handover for primary serving cell (PCell). In this case, the UE detaches from the old cell and applies the configuration of the target cell. In other words, the primary and secondary component carriers of the old source cell are released in order for the UE to apply the target cell configuration. It is noted that the target cell configuration can configure CA, but the UE always stops CA in the source cell when receiving the handover command. Additionally, in cases with DC, a handover of PCell similarly results in the release of the secondary node (SN). For DC, the master node (MN) releases the source SN before sending radio resource control (RRC) reconfiguration instructing the UE to perform PCell change to target MN. This can also be observed from 3GPP technical specification (TS) 38.331 section 5.3.5.5.2, which states to reset the MAC entity of the cell group, and to consider the secondary cell(s) (SCell(s)) of this cell group, if configured, that are not included in the SCellToAddModList in the RRC reconfiguration message, to be in deactivated state. Further, the specification states to apply the value of the newUE-Identity as the C-RNTI for this cell group, to configure lower layers in accordance with the received spCellConfigCommon, and to configure lower layers in accordance with any additional fields, if included in the received reconfiguration WithSync.

The UE stops communication with special cell (SpCell) and SCell of the source gNB when performing a HO. The specification states that the UE places some SCells that are not added or modified by the target gNB to "deactivated state," but does not state that the UE keeps receiving data from the SCell. This means independent of the signal quality of the SCell or primary secondary cell group cell (PScell), all the secondary links are released before implementing HO for PCell. Service interruption can occur and therefore there is room for further optimization. This is because in most scenarios of CA or DC, the channel quality between the UE and the two cells (PCell and SCell/or PScell) is different since most likely the physical locations of the cells are different. For example, in cases with CA, PCell and SCell could be deployed via different transmission reception points (TRPs) which are physically separated. In cases with a typical DC deployment, the two gNBs are deployed at different locations. It is noted that, when considering joint FR1 and FR2 operation, it is very likely the channel qualities of these two frequency bands (i.e., PCell and SCell/PScell) are different.

In view of the above, it would be desirable to be able to achieve zero outage and deliver high reliable communication during HO in the scenario of CA or DC, especially considering a UE already has two independent RF chains (for example considering inter-band case like joint FR1 and FR2 operation) and there is already the possibility of transmitting DL data via physical downlink shared channel (PDSCH) and transmitting UL data via physical uplink shared channel (PUSCH).

Therefore, example embodiments described herein provide a novel HO procedure that takes advantage of CA or DC operation and achieves zero outage. Embodiments that take advantage of DC operation are not encompassed by the wording of the claims. In cases with CA, SCell can be configured with both physical downlink control channel (PDCCH) and physical uplink control channel (PUCCH). The only restriction is for PUCCH, as it can be configured just during SCell setup. In cases with DC, which may be useful for understanding the claims whilst not being encompassed by the wording of the claims, PScell has both PDCCH and PUCCH.

Certain example embodiments may be configured to keep U-plane data communication over a different carrier and/or cell (SCell in case with CA or PScell in case with DC) during the handover process of PCell, e.g., to avoid interruption of U-plane data communication. According to an embodiment, control plane and user plane packets may be handled via different carriers and/or cells. Taking joint FR1 and FR2 operation as one example, HO could be done via FR1, while at the same time keeping all data connection(s) over FR2. This is different from the current HO procedure. According to an embodiment, during the handover process of PCell, the DL and UL data communication can be kept over SCell or PScell, where PDCCH and PUCCH are only used to carry control information for data transmission, for example PDCCH may be used to carry resource grant information for both DL and UL data transmission (including both initial transmission and retransmission) and PUCCH may be used to carry uplink control information such as HARQ-ACK feedback, channel state information (CSI), scheduling request (SR) and so on. For supporting DL and UL data transmission over the SCell and PScell during the handover process of PCell, in addition to PDCCH and PUCCH, PDSCH and PUSCH over the SCell and PScell may be needed as well for transmitting data packet.

In some embodiments, in cases with CA, a UE may be configured with both PDCCH and PUCCH in the SCell during a SCell set up phase (for at least one SCell). This procedure ensures that all U-plane related operation can be done over SCell only, including at least DL scheduling, UL scheduling, and HARQ-ACK feedback transmission. When applicable, the number of SCells (carrying both control and data channels for both DL and UL) can be configured depending on the reliability requirements. For example, with high reliable communication, multiple SCells can be configured and the data packet can be duplicated over multiple SCells.

Certain embodiments provide new behaviors of UE and gNB for PCell HO. For example, instead of releasing all carriers from UE and gNB side, the HO procedure may be carried out over PCell. However, the secondary component carrier, i.e., SCell, is still used for data packet transmission and reception. In order to support this procedure, the PDCP layer at PCell is configured to deliver all of the coming DL data to the SCell. Similarly, in UL, PUSCH resource is scheduled on SCell based on the scheduling decision at MAC layer. For UL, in order to make sure data is transmitted (and can be transmitted) on SCell, some configured logical channel (LCH) mapping restriction could be lifted momentarily until the HO session is completed. For instance, originally, some LCHs may be just allowed to use on the resource from PCell based on configured LCH mapping restrictions; upon PCell HO, such a restriction could be lifted and hence data from these LCHs can be transmitted on resources of SCell as well as during the HO process. The UE may restore the LCH mapping restriction autonomously after HO is completed and/or until a further instruction is received from the gNB.

In an embodiment, to guarantee the high reliability communication between a UE and SCell, additional measures, for example temporary increased Tx power, more robust modulation coding scheme (MCS) selection, activating different ways of diversity (in time/frequency/spatial) via, e.g., activating K-repetition (i.e., blind repetition), or the like, can be taken in SCell. Once PCell HO is successfully completed (i.e., after RACH procedure at the target cell), the new serving PCell will take care of communications with the UE. Also, it may be up to the new serving PCell to make any change of the SCell.

According to certain embodiments, in cases with DC, similar as the CA case, new behaviors of UE and gNB may be provided for PCell HO. For example, instead of releasing the SN, HO procedure may be be carried out over PCell, and the PScell may still be used for data communication. For this, PDCP layer at PCell may forward all the coming DL data to PScell via Xn interface. In UL, PUSCH resource can be scheduled just on PScell.

In some embodiments, in order to avoid simultaneous HO between PCell and PScell, a "HO prohibited timer" may be provided. When PCell determines to enter HO process, it will send HO prohibited information to PScell via Xn interface. The value of the "HO prohibited timer" can be set according to the estimated interruption time in PCell taking into account specific HO scheme (e.g., contention based or contention free RACH procedure).

Furthermore, similar to the CA case, to guarantee the high reliability between UE and the PScell, additional measures, for example temporary increased Tx power, activating different ways of diversity (e.g., PDCP duplication) or the like, may be taken. In an embodiment, once PCell HO is completed, the new serving PCell can take care of communication with the UE. Also, it can be up to the new serving PCell to make any change of the PSCell.

According to certain embodiments, the UEs may be configured with clear requirements of at least zero outage. In addition, the network may be configured with the latest measurements about both master cell group (MCG) and/or secondary cell group (SCG) and, therefore, the network knows if the radio link quality of the serving SCell or SCG is sufficient enough to carry a baseline handover for the PCell. If the measurement of the SCell or SCG is significantly better than the PCell, the network can configure the UE according to example embodiments described herein and, if not, the network can configure DAPS for the PCell.

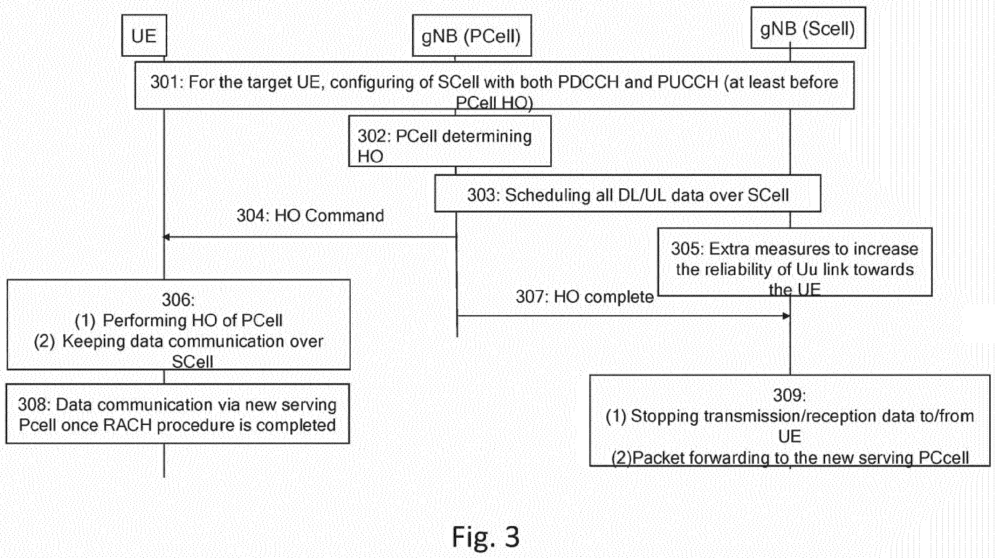

Fig. 3 illustrates an example signaling diagram for PCell HO in a case with CA, according to one embodiment. As illustrated in Fig. 3, at 301, the PCell configures at least one SCell with both PDCCH and PUCCH before PCell HO. It is noted that, in the case of CA, both the PDCCH and PUCCH should be configured for a SCell before their use. Once the HO conditions are fulfilled, at 302, the PCell may begin the HO process. In an embodiment, at 303, the PCell may inform the SCell about HO decision, and the PCell and SCell jointly schedule (DL/UL) data packet transmission/reception over SCell only, i.e., both PDSCH and PUSCH are scheduled over SCell only. According to some embodiments, a LCH mapping restriction may be at least momentarily modified based on the configured rule.

As further illustrated in Fig. 3, at 304, the PCell informs the UE about the SCell to be used for data communication during PCell HO phase, e.g., in a HO command. It is noted that, in some embodiments, procedure 304 can also be based on configuration, e.g., configured beforehand via RRC signalling. At 305, the SCell may perform extra measures to increase the reliability towards the UE. The extra measures may include, for example: increased transmission power, more robust MCS selection, activating K-repetition (i.e., blind repetition), activating PDCP duplication (if possible) and so on. The goal of performing these "extra measures" includes keeping the communication more reliable.

As also illustrated in the example of Fig. 3, at 306, the UE may perform two different operations: (1) performing PCell HO and starting RACH procedure at the target cell; and (2) continuing UL/DL communication via the SCell. At 307, once the PCell receives HO confirmation from the target cell (after successfully RACH procedure), the PCell may inform the SCell that the UE has successfully connected to the new PCell. At 308, the UE may perform the data communication via the new serving PCell once RACH procedure is completed. The SCell may, at 309, forward the data packets to the new serving cell and stop sending data packets to the UE.

It is noted that, in certain embodiments, the time order of performing one or more of the procedures shown in Fig. 3 can be exchanged. With the use of certain embodiments, such as that illustrated in Fig. 3, even during PCell HO, the U-plane data communication can be kept without any interruption. Compared to DAPS HO, the channel quality at the SCell is better compared to the PCell, which results in communication that is more reliable, otherwise the network will not configure such HO behavior.

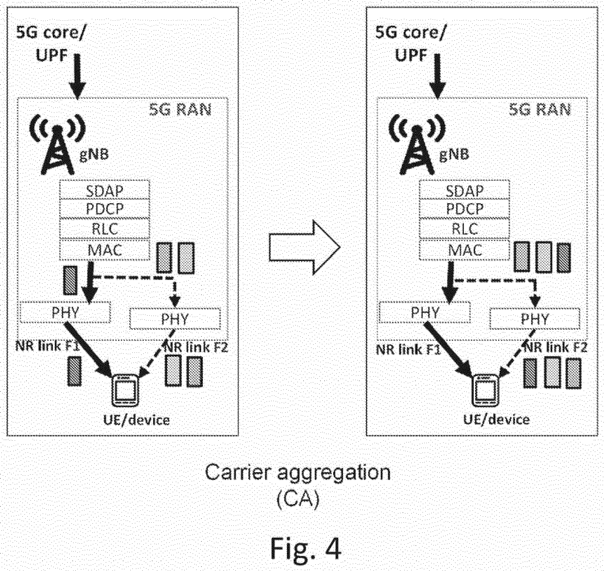

From the DL data transmission point of view, Fig. 4 illustrates one example before and during PCell HO phase. Before PCell HO, PDCP PDUs can be delivered to either PCell or SCell or both. During PCell HO process (assuming NR link F1 is for HO), all the PDCP PDUs need to be delivered to the configured SCell (e.g., NR link F2). Additionally, NR link F1 is used for completing HO signalling and RACH procedure at the target cell. Similar operations may be performed in UL direction, NR link F2 is used for data communication and NR link F1 is used for HO.

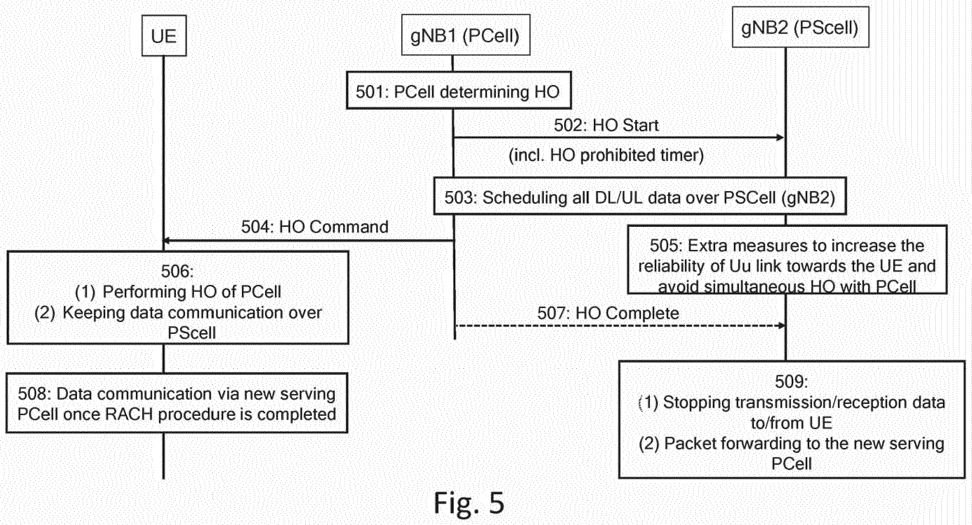

Fig. 5 illustrates an example signaling diagram for PCell HO in a case with DC, according to one embodiment which is not encompassed by the wording of the claims. Some of the procedures illustrated in the example of Fig. 5 may be somewhat similar to those of Fig. 3. For DC, the PScell has the PDCCH and PUCCH pre-configured already. In other words, in the case of DC, these channels are available for use. However, in an embodiment, the PCell may inform the PScell and UE that, during the HO process, PDCCH and PUCCH should be on the PScell. As illustrated in the example of Fig. 5, at 501, the PCell may determine to begin the HO process. At 502, the PCell may indicate HO start to the PScell, optionally with an HO prohibited timer. For example, when included, the HO prohibited timer may be transmitted over Xn interface (interface between gNB1 and gNB2) to PScell in the message of HO start. The intention of this new parameter is to avoid simultaneous HO of PCell and PScell. In other words, during the process of PCell HO, the PScell should maintain the communication link with the UE by all means. In this way, the data communication between the PScell and UE can be kept in a high reliable manner.

In an embodiment, at 503, the PCell and PScell may schedule (DL/UL) data packet transmission/reception over PScell only, i.e., both PDSCH and PUSCH are scheduled over PScell. At 504, the PCell may inform the UE about the PScell to be used for data communication during PCell HO phase, e.g., in a HO command. At 505, the PScell may perform extra measures to increase the reliability towards the UE. Similar to the CA case, with DC, extra measures can be taken during PCell HO phase, For example, these extra measures may include increased transmission power, robust MCS selection, activating K-repetition (i.e., blind repetition) and PDCP supplication and so on.

As also illustrated in the example of Fig. 5, at 506, the UE may perform two different operations: (1) performing PCell HO and starting RACH procedure at the target cell; and (2) continuing UL/DL communication via the PScell. Optionally, at 507, once the PCell receives HO confirmation from the target cell (after successfully RACH procedure), the PCell may inform the PSCell that the UE has successfully connected to the new PCell (i.e., HO complete). For instance, the HO complete message may be sent only when the HO is completed earlier than expiration of the HO prohibited timer. At 508, the UE may perform the data communication via the new serving PCell once RACH procedure is completed. The PScell may, at 509, forward the data packets to the new serving PCell and stop sending/receiving data packets to/from the UE. In another example, if both HO start and HO complete message are included, then the inclusion of the HO prohibited timer may be omitted.

It is noted that, in case including a HO prohibited timer for the DC case, the new signalling over Xn interface is needed between the two gNBs in order to deliver such information. However, with CA, in principle, such PCell HO information should be known at the SCell as well. Since PCell and SCell are within the same gNB, it can be supported by proper gNB implementation.

Certain embodiments can provide several options for how to handle Cell Radio Network Temporary Identifier (C-RNTI), which is a unique identification used for identifying RRC connection and scheduling which is dedicated to a particular UE. For example, some embodiments consider whether the UE should be allocated with multiple C-RNTIs.

According to an embodiment, one option may include providing simultaneous multiple C-RNTIs. In this case, the target gNB can allocate a different C-RNTI to the UE. And, before SCell stopping transmitting to the UE, the UE has two different C-RNTIs. This embodiment may also include the serving PCell informing the target cell about the UE C-RNTI. Then, once the SCell has forwarded all data to the new PCell, the C-RNTI used for data communication with the SCell is released.

In an embodiment, another option may include providing one active C-RNTI only. In this case, the target PCell can allocate a new C-RNTI after getting the confirmation from the serving PCell that all communication from SCell has stopped. If any communication is needed before that, a temporary-RNTI can be used.

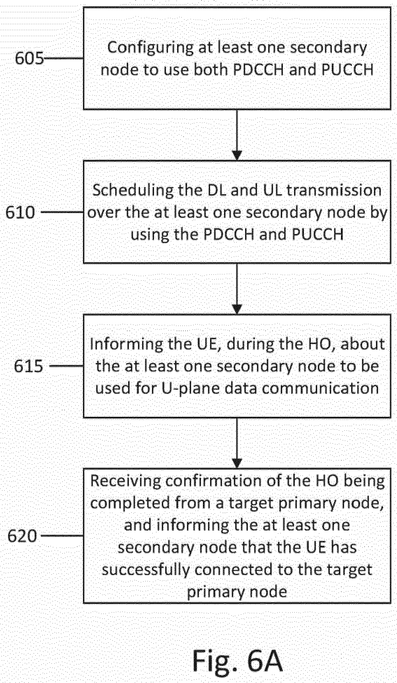

Fig. 6A illustrates an example flow diagram of a method for optimized handover to achieve user-plane zero outage, according to an example embodiment. In certain example embodiments, the flow diagram of Fig. 6A may be performed by a network entity or network node in a communications system, such as LTE or 5G NR. In some example embodiments, the network entity performing the method of Fig. 6A may include or be included in a base station, access node, node B, eNB, gNB, NG-RAN node, transmission-reception points (TRPs), high altitude platform stations (HAPS), relay station or the like. In one embodiment, the network node performing the method of Fig. 6A may include a primary node, primary gNB, or PCell, such as the gNB/PCell illustrated in the examples of Figs. 3 or 5, or similar radio node. Therefore, the method of Fig. 6A may include one or more operations illustrated in the examples of Figs. 3 or 5.

As illustrated in Fig. 6A, the method includes, at 605, configuring, before a HO from the primary node, at least one secondary node (e.g., SCell or PSCell) to use both PDCCH and PUCCH. According to an embodiment, the configuring 605 may include informing the at least one secondary node and the UE that, during primary node HO process, PDCCH and PUCCH should be on the at least one secondary node. In one example embodiment, in the case of CA operation mode, prior to the configuring 605 of the at least one secondary node to use both PDCCH and PUCCH, the method may include a channel configuration procedure in which the PDCCH and PUCCH are configured for the secondary node before using them. For DC operation mode, the PDCCH and PUCCH would have already been pre-configured. For CA operation mode, the at least one secondary node is a SCell. For DC operation mode, the at least one secondary node may be a PScell. In some embodiments, the number of secondary nodes (carrying both control and data channels for both DL and UL) can be configured depending on the reliability requirements. For example, with high reliable communication, multiple secondary nodes can be configured and the data packet can be duplicated over the multiple secondary nodes.

When conditions for the HO are fulfilled, the method includes, at 610, scheduling the DL transmission and the UL transmission over the at least one secondary node by using the PDCCH and the PUCCH. In an embodiment, the PDCP layer at primary node delivers all the incoming DL data to the at least one secondary node. Similarly, in UL, PUSCH resource is only scheduled on the at least one secondary node based on the scheduling decision at MAC layer. According to one embodiment, the method may include temporarily lifting LCH mapping restrictions until the handover is completed, e.g., in order to make sure data can be transmitted on the at least one secondary node. For instance, originally, some LCHs may be only allowed to utilize resources from the primary node based on configured LCH mapping restrictions; upon HO of the primary node, such restriction could be lifted and therefore data from these LCHs can be transmitted on resources of the secondary node(s) as well during the HO process. The UE may restore the LCH mapping restriction autonomously after HO is completed and/or until a further instruction is received from the network.

In an embodiment, the method includes, at 615, informing the UE, during the HO, about the at least one secondary node to be used for U-plane data communication. According to certain embodiments, the U-plane data communication with the at least one secondary node is maintained during the HO.

As also illustrated in the example of Fig. 6A, the method may include, at 620, receiving confirmation of the HO being completed from a target primary node, and informing the at least one secondary node that the UE has successfully connected to the target primary node. In some embodiments, the HO may be performed over FR1 while keeping the data connection over FR2, or vice versa.

According to an embodiment, for DC operation mode, instead of releasing SN, the HO procedure may be carried out over the primary node and the primary secondary node (e.g., PScell) is still used for data communication. Therefore, in an embodiment, the PDCP layer at the primary node will forward incoming DL data to the primary secondary node (e.g., PScell) via a Xn interface and, in UL, PUSCH resource can be scheduled just on the primary secondary node (e.g., PScell). In some embodiments, for DC operation mode, the method may include transmitting, to the at least one secondary node, a message indicating a start of the handover process, wherein the message comprises a handover prohibited timer to avoid simultaneous handover of the primary node and the at least one secondary node. In an embodiment, the handover prohibited timer is transmitted to the at least one secondary node over a Xn interface. In one embodiment, the value of the HO prohibited timer can be set according to the estimated interruption time in the primary node taking into account specific HO scheme (e.g., contention based or contention free RACH procedure). According to some embodiments, the method may include transmitting a HO complete message to the at least one secondary node to indicate that the HO is completed before expiry of the HO prohibited timer. In some embodiments, once HO from the primary node to the new target primary node is completed, the new target primary node may take care of communication with the UE. In addition, it may be up to the new target primary node to make any change of the primary secondary node (e.g., PScell).

In an embodiment, the UE may be simultaneously allocated with multiple C-RNTIs, and the method may include informing the target primary node about the multiple C-RNTIs. In a further embodiment, the UE may be allocated one active C-RNTI, and the method may include providing a confirmation to the target primary node that communication between the secondary node and the UE has ceased so that the target node can allocate a new C-RNTI for the UE.

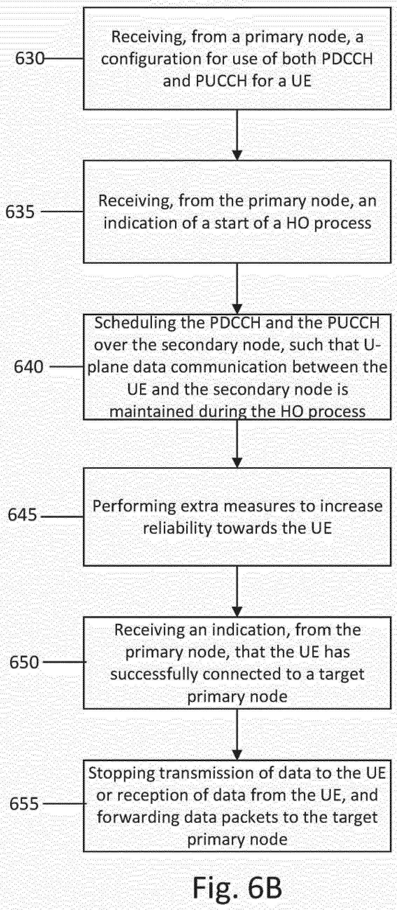

Fig. 6B illustrates an example flow diagram of a method for optimized handover to achieve user-plane zero outage, according to an example embodiment. In certain example embodiments, the flow diagram of Fig. 6B may be performed by a network entity or network node in a communications system, such as LTE or 5G NR. In some example embodiments, the network entity performing the method of Fig. 6B may include or be included in a base station, access node, node B, eNB, gNB, NG-RAN node, transmission-reception points (TRPs), high altitude platform stations (HAPS), relay station or the like. In one embodiment, the network node performing the method of Fig. 6B may include a secondary node, secondary gNB, SCell, or PScell, such as the gNB/SCell or gNB2/PScell illustrated in the examples of Figs. 3 or 5, or similar radio node. For instance, for CA operation mode, the secondary node may be a SCell and, for DC operation mode, the secondary node may be a PScell. Therefore, the method of Fig. 6B may include one or more operations illustrated in the examples of Figs. 3 or 5.

As illustrated in the example of Fig. 6B, the method may include, at 630, receiving, from a primary node (e.g., PCell), a configuration for use of both PDCCH and PUCCH. According to an embodiment, the receiving 630 may include receiving an indication that, during primary node HO process, PDCCH and PUCCH should be on the secondary node. In one example embodiment, in the case of CA operation mode, prior to receiving 630 the configuration to use both PDCCH and PUCCH, the method may include a channel configuration procedure in which the PDCCH and PUCCH are configured for the secondary node before using them. It is noted that, for DC operation mode, the PDCCH and PUCCH would have already been pre-configured. In an embodiment, the method may also include, at 635, receiving, from the primary node, an indication of a start of a HO process. In an embodiment, the method may include, at 640, scheduling the PDCCH and the PUCCH over the secondary node, such that U-plane data communication between the UE and the secondary node is maintained during the HO process.

As further illustrated in the example of Fig. 6B, the method may include, at 645, performing extra measures to increase reliability towards the UE. For example, the extra measures may include one or more of increased transmission power, more robust modulation and coding scheme (MCS) selection, activating blind repetition, or activating packet data convergence protocol (PDCP) duplication and so on.

In certain embodiments, the method may include, at 650, receiving an indication, from the primary node, that the UE has successfully connected to a target primary node. The method may then include, at 655, stopping transmission of data to the UE or reception of data from the UE, and forwarding data packets to the target primary node. In some embodiments, the HO may be performed over FR1 while keeping the data connection over FR2, or vice versa.

In some embodiments, for DC operation mode, the method may include receiving, from the primary node, a message indicating a start of the handover process, where the message may include a handover prohibited timer to avoid simultaneous handover of the primary node and the secondary node. In an embodiment, the handover prohibited timer may be received from the primary node over a Xn interface. In one embodiment, the value of the HO prohibited timer can be set according to the estimated interruption time in the primary node taking into account specific HO scheme (e.g., contention based or contention free RACH procedure). According to some embodiments, the method may include receiving a HO complete message, from the primary node, to indicate if the HO is completed before expiry of the HO prohibited timer.

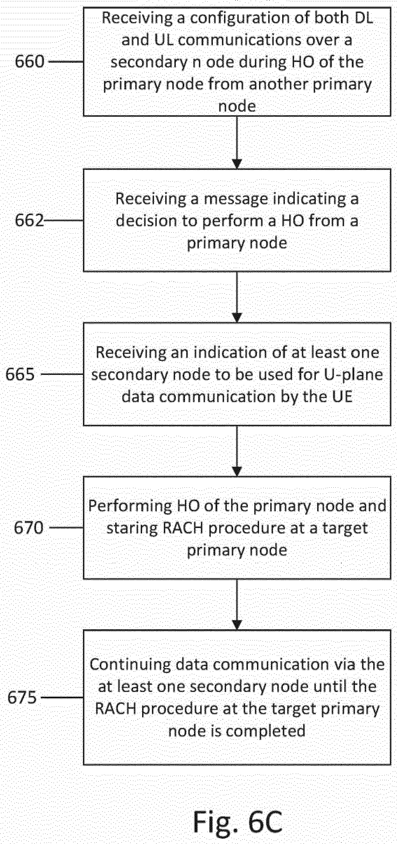

Fig. 6C illustrates an example flow diagram of a method for optimized handover to achieve user-plane zero outage, according to one example embodiment. In certain example embodiments, the flow diagram of Fig. 6C may be performed by a network entity or network node in a communications system, such as LTE or 5G NR. For instance, in some example embodiments, the network entity performing the method of Fig. 6C may include a UE, SL UE, mobile station, IoT device, UE type of road side unit (RSU), other device, or the like. In one embodiment, the network node performing the method of Fig. 6C may include a UE, such as the UE illustrated in the examples of Figs. 3 or 5, or similar device. Therefore, the method of Fig. 6C may include one or more operations illustrated in the examples of Figs. 3 or 5.

In an embodiment, the method of Fig. 6C may include, at 660, receiving a configuration of both downlink (DL) and uplink (UL) communications over a secondary node during the handover of the primary node from another primary node. The method may also include, at 662, receiving a message indicating a decision to perform a HO (e.g., HO command message) from a primary node (e.g., PCell). In an embodiment, the method may also include, at 665, receiving an indication of at least one secondary node (e.g., SCell or PScell) to be used for U-plane data communication by the UE, such that the U-plane data communication with the at least one secondary node is maintained during the HO. According to certain embodiments, the HO may be performed over FR1 while keeping the data connection over FR2. In some embodiments, the method may include, at 670, performing HO of the primary node and staring RACH procedure at a target primary node and, at 675, continuing data communication via the at least one secondary node until the RACH procedure at the target primary node is completed. Then, when the RACH procedure at the target primary node is completed, the method may include performing data communication via the target primary node. Therefore, as a result of the example method illustrated in Fig. 6C, the UE can perform HO from the primary node and start RACH procedure at the target primary node, while continuing UL/DL communication via the secondary node (e.g., SCell or PScell).

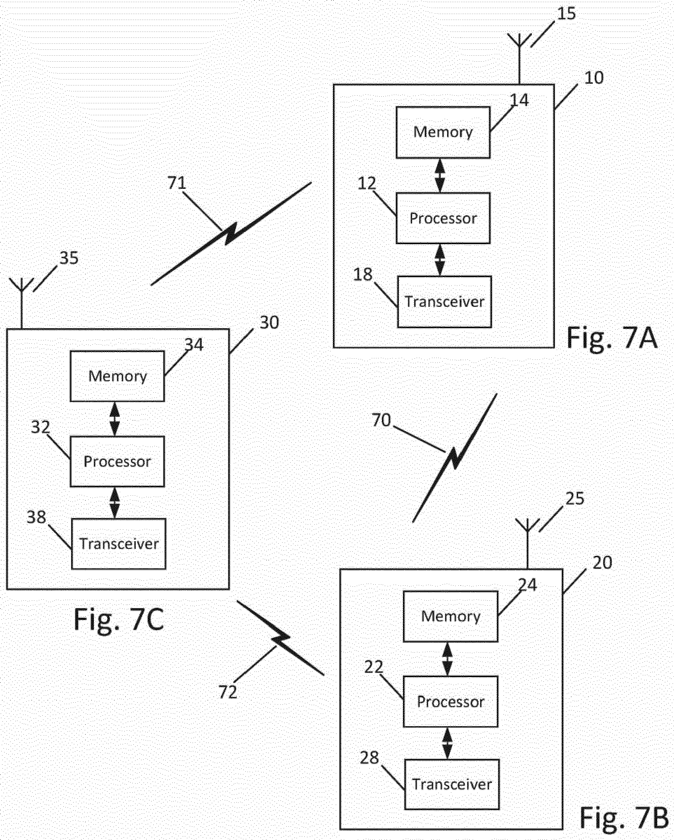

Fig. 7A illustrates an example of an apparatus 10 according to an embodiment. In an embodiment, apparatus 10 may be a node, host, or server in a communications network or serving such a network. For example, apparatus 10 may be a satellite, base station, a Node B, an evolved Node B (eNB), 5G Node B or access point, next generation Node B (NG-NB or gNB), WLAN access point, TRP, IAB node, and/or HAPS, associated with a radio access network, such as a LTE network, 5G or NR. In example embodiments, apparatus 10 may be NG-RAN node, an eNB in LTE, or gNB in 5G. According to one embodiment, apparatus 10 may be or may include a primary node or PCell, for example.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 7A.

As illustrated in the example of Fig. 7A, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 7A, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a NW node or RAN node, such as a base station, access point, Node B, eNB, gNB, WLAN access point, or the like. For example, in some embodiments, apparatus 10 may be configured to perform one or more of the processes depicted in any of the flow charts or signaling diagrams described herein, such as those illustrated in Figs. 3, 5, 6A, 6B or 6C. In some embodiments, as discussed herein, apparatus 10 may be configured to perform a procedure relating to optimized handover to achieve user-plane zero outage, for instance.

Fig. 7B illustrates an example of an apparatus 20 according to another embodiment. In an embodiment, apparatus 20 may be a node or element in a communications network or associated with such a network, such as a UE, communication node, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like. It should be noted that one of ordinary skill in the art would understand that apparatus 20 may include components or features not shown in Fig. 7B.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 7B.

As illustrated in the example of Fig. 7B, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 7B, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 or apparatus 30 via a wireless or wired communications link or interface 70 according to any radio access technology, such as NR.

According to some embodiments, processor 22 and memory 24 may be included in or may form a part of processing circuitry/means or control circuitry/means. In addition, in some embodiments, transceiver 28 may be included in or may form a part of transceiving circuitry or transceiving means.

As discussed above, according to some embodiments, apparatus 20 may be a UE, communication node, mobile equipment (ME), mobile station, mobile device, stationary device, IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as that illustrated in Figs. 3, 5, 6A, 6B or 6C. Thus, according to an embodiment, apparatus 20 may be configured to perform a procedure relating to optimized handover to achieve user-plane zero outage as discussed elsewhere herein, for instance.

Fig. 7C illustrates an example of an apparatus 30 according to another example embodiment. In an example embodiment, apparatus 30 may be a node or element in a communications network or associated with such a network, such as a satellite, base station, a Node B, an evolved Node B (eNB), 5G Node B or access point, next generation Node B (NG-NB or gNB), and/or WLAN access point, associated with a radio access network, such as a LTE network, 5G or NR. According to one embodiment, apparatus 30 may be or may be included in a secondary network node, secondary gNB, or SCell, for example.

In some example embodiments, apparatus 30 may include one or more processors, one or more computer-readable storage medium (for example, memory, storage, or the like), one or more radio access components (for example, a modem, a transceiver, or the like), and/or a user interface. In some example embodiments, apparatus 30 may be configured to operate using one or more radio access technologies, such as GSM, LTE, LTE-A, NR, 5G, WLAN, WiFi, NB-IoT, MulteFire, and/or any other radio access technologies. It should be noted that one of ordinary skill in the art would understand that apparatus 30 may include components or features not shown in Fig. 7C.

As illustrated in the example of Fig. 7C, apparatus 30 may include or be coupled to a processor 32 for processing information and executing instructions or operations. Processor 32 may be any type of general or specific purpose processor. In fact, processor 32 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 32 is shown in Fig. 7C, multiple processors may be utilized according to other example embodiments. For example, it should be understood that, in certain example embodiments, apparatus 30 may include two or more processors that may form a multiprocessor system (e.g., in this case processor 32 may represent a multiprocessor) that may support multiprocessing. In certain example embodiments, the multiprocessor system may be tightly coupled or loosely coupled (e.g., to form a computer cluster).

Processor 32 may perform functions associated with the operation of apparatus 30 including, as some examples, precoding of antenna gain/phase parameters, encoding and decoding of individual bits forming a communication message, formatting of information, and overall control of the apparatus 30, including processes related to management of communication resources.

Apparatus 30 may further include or be coupled to a memory 34 (internal or external), which may be coupled to processor 32, for storing information and instructions that may be executed by processor 32. Memory 34 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 34 can be comprised of any combination of random access memory (RAM), read only memory (ROM), static storage such as a magnetic or optical disk, hard disk drive (HDD), or any other type of non-transitory machine or computer readable media. The instructions stored in memory 34 may include program instructions or computer program code that, when executed by processor 32, enable the apparatus 30 to perform tasks as described herein.

In an example embodiment, apparatus 30 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 32 and/or apparatus 30.

In some example embodiments, apparatus 30 may also include or be coupled to one or more antennas 35 for receiving a downlink signal and for transmitting via an uplink from apparatus 30. Apparatus 30 may further include a transceiver 38 configured to transmit and receive information. The transceiver 38 may also include a radio interface (e.g., a modem) coupled to the antenna 35. The radio interface may correspond to a plurality of radio access technologies including one or more of GSM, LTE, LTE-A, 5G, NR, WLAN, NB-IoT, BT-LE, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 38 may be configured to modulate information on to a carrier waveform for transmission by the antenna(s) 35 and demodulate information received via the antenna(s) 35 for further processing by other elements of apparatus 30. In other example embodiments, transceiver 38 may be capable of transmitting and receiving signals or data directly. Additionally or alternatively, in some example embodiments, apparatus 30 may include an input and/or output device (I/O device). In certain example embodiments, apparatus 30 may further include a user interface, such as a graphical user interface or touchscreen.

In an example embodiment, memory 34 stores software modules that provide functionality when executed by processor 32. The modules may include, for example, an operating system that provides operating system functionality for apparatus 30. The memory may also store one or more functional modules, such as an application or program, to provide additional functionality for apparatus 30. The components of apparatus 30 may be implemented in hardware, or as any suitable combination of hardware and software. According to an example embodiment, apparatus 30 may optionally be configured to communicate with apparatus 10 via a wireless or wired communications link 71 and/or to communicate with apparatus 20 via a wireless or wired communications link 72, according to any radio access technology, such as NR.

According to some example embodiments, processor 32 and memory 34 may be included in or may form a part of processing circuitry or control circuitry. In addition, in some example embodiments, transceiver 38 may be included in or may form a part of transceiving circuitry.

As discussed above, according to some example embodiments, apparatus 30 may be a secondary network node, secondary gNB, or SCell, for example. According to certain example embodiments, apparatus 30 may be controlled by memory 34 and processor 32 to perform the functions associated with example embodiments described herein. For instance, in some example embodiments, apparatus 30 may be configured to perform one or more of the processes depicted in any of the diagrams or signaling flow diagrams described herein, such as those illustrated in Figs. 3, 5, 6A, 6B, or 6C. According to certain example embodiments, apparatus 30 may be configured to perform a procedure relating to optimized handover to achieve user-plane zero outage as described elsewhere herein, for instance.

In some embodiments, an apparatus (e.g., apparatus 10 and/or apparatus 20 and/or apparatus 30) may include means for performing a method, a process, or any of the variants discussed herein. Examples of the means may include one or more processors, memory, controllers, transmitters, receivers, and/or computer program code for causing the performance of the operations.

In view of the foregoing, certain example embodiments provide several technological improvements, enhancements, and/or advantages over existing technological processes and constitute an improvement at least to the technological field of wireless network control and/or management. For example, as discussed in detail above, certain embodiments provide for simpler zero outage HO implementation than DAPS since it still the same as regular CA/DC case, with the difference that control plane and user plane are handled via different carriers/cells, for example HO via FR1, while keeping all data connection over FR2 or vice versa. Accordingly, the use of certain example embodiments results in improved functioning of communications networks and their nodes, such as base stations, eNBs, gNBs, and/or IoT devices, UEs or mobile stations.

In some example embodiments, the functionality of any of the methods, processes, signaling diagrams, algorithms or flow charts described herein may be implemented by software and/or computer program code or portions of code stored in memory or other computer readable or tangible media, and may be executed by a processor.

In some example embodiments, an apparatus may include or be associated with at least one software application, module, unit or entity configured as arithmetic operation(s), or as a program or portions of programs (including an added or updated software routine), which may be executed by at least one operation processor or controller. Programs, also called program products or computer programs, including software routines, applets and macros, may be stored in any apparatus-readable data storage medium and may include program instructions to perform particular tasks. A computer program product may include one or more computer-executable components which, when the program is run, are configured to carry out some example embodiments. The one or more computer-executable components may be at least one software code or portions of code. Modifications and configurations required for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality of example embodiments may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality of example embodiments may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein may apply to both singular and plural implementations, regardless of whether singular or plural language is used in connection with describing certain embodiments. For example, an embodiment that describes operations of a single network node may also apply to embodiments that include multiple instances of the network node, and vice versa.

## Claims

1. A network node, comprising:
means for providing a primary cell and at least one secondary cell for data transmission with carrier aggregation;
means for configuring, before a primary cell handover, the at least one secondary cell to use both physical downlink control channel and physical uplink control channel;
means for scheduling, when conditions for the primary cell handover are fulfilled, downlink transmission and uplink transmission over the at least one secondary cell by using the physical downlink control channel and the physical uplink control channel; and
means for informing a user equipment, during the primary cell handover, about the at least one secondary cell to be used for user plane data communication, wherein the user plane data communication with the at least one secondary cell is maintained during the primary cell handover.

2. The network node of claim 1, further comprising:
means for receiving confirmation of the primary cell handover being completed from a target primary cell;
means for informing the at least one secondary cell that the user equipment has successfully connected to the target primary cell;
means for stopping, at the at least one secondary cell, transmission of data to the user equipment or reception of data from the user equipment; and
means for forwarding packets to the target primary cell.

3. The network node of claims 1 or 2, wherein the primary cell handover is performed over frequency range 1 while keeping the data connection over frequency range 2, or wherein the primary cell handover is performed over frequency range 2 while keeping the data connection over frequency range 1.

4. The network node of any preceding claim,
wherein the user equipment is simultaneously allocated with multiple cell radio network temporary identifiers, and the network node comprises means for informing the target primary cell about the multiple cell radio network temporary identifiers, or
wherein the user equipment is allocated one active cell radio network temporary identifier, and the network node comprises means for providing a confirmation to the target primary cell that communication between the secondary cell and the user equipment has ceased.

5. The network node of any preceding claim, comprising means for temporarily lifting logical channel mapping restrictions until the primary cell handover is completed.

6. The network node of any preceding claim, comprising means for performing, at the at least one secondary cell, at least one of: increased transmission power, more robust modulation and coding scheme selection, activating blind repetition, or activating packet data convergence protocol duplication.

7. A method performed by a network node, the method comprising:
providing a primary cell and at least one secondary cell for data transmission with carrier aggregation;
configuring, before a primary cell handover, the at least one secondary cell to use both physical downlink control channel and physical uplink control channel;
scheduling, when conditions for the primary cell handover are fulfilled, downlink transmission and uplink transmission over the at least one secondary cell by using the physical downlink control channel and the physical uplink control channel; and
informing a user equipment, during the primary cell handover, about the at least one secondary cell to be used for user plane data communication, wherein the user plane data communication with the at least one secondary cell is maintained during the primary cell handover.

8. The method of claim 7, further comprising:
receiving confirmation of the primary cell handover being completed from a target primary cell;
informing the at least one secondary cell that the user equipment has successfully connected to the target primary cell;
stopping, at the at least one secondary cell, transmission of data to the user equipment or reception of data from the user equipment; and
forwarding packets to the target primary cell.

9. The method of claims 7 or 8, wherein the primary cell handover is performed over frequency range 1 while keeping the data connection over frequency range 2, or wherein the primary cell handover is performed over frequency range 2 while keeping the data connection over frequency range 1.

10. The method of any of claims 7 to 9,
wherein the user equipment is simultaneously allocated with multiple cell radio network temporary identifiers, and the method comprises informing the target primary cell about the multiple cell radio network temporary identifiers, or
wherein the user equipment is allocated one active cell radio network temporary identifier, and the method comprises providing a confirmation to the target primary cell that communication between the secondary cell and the user equipment has ceased.

11. The method of any of claims 7 to 10, comprising temporarily lifting logical channel mapping restrictions until the primary cell handover is completed.

12. The method of any of claims 7 to 11, comprising performing, at the secondary cell, at least one of: increased transmission power, more robust modulation and coding scheme selection, activating blind repetition, or activating packet data convergence protocol duplication.

## Patentansprüche

1. Netzwerkknoten, der Folgendes umfasst:
Mittel zum Bereitstellen einer Primärzelle und mindestens einer Sekundärzelle für eine Datenübertragung mit Trägeraggregation;
Mittel zum Auslegen der mindestens einen Sekundärzelle zum Verwenden sowohl eines physischen Downlinksteuerkanals als auch eines physischen Uplinksteuerkanals vor einer Primärzellenübergabe;
Mittel zum Planen einer Downlinkübertragung und einer Uplinkübertragung über die mindestens eine Sekundärzelle unter Verwendung des physischen Downlinksteuerkanals und des physischen Uplinksteuerkanals, wenn Bedingungen für die Primärzellenübergabe erfüllt sind; und
Mittel zum Informieren einer Teilnehmereinrichtung während der Primärzellenübergabe darüber, dass die mindestens eine Sekundärzelle für eine Benutzerebenendatenkommunikation zu verwenden ist, wobei die Benutzerebenendatenkommunikation mit der mindestens einen Sekundärzelle während der Primärzellenübergabe aufrechterhalten wird.

2. Netzwerkknoten nach Anspruch 1, der ferner Folgendes umfasst:
Mittel zum Empfangen einer Bestätigung, dass die Primärzellenübergabe abgeschlossen ist, von einer Zielprimärzelle;
Mittel zum Informieren der mindestens einen Sekundärzelle darüber, dass sich die Teilnehmereinrichtung erfolgreich mit der Zielprimärzelle verbunden hat;
Mittel zum Beenden einer Übertragung von Daten zur Teilnehmereinrichtung oder eines Empfangs von Daten von der Teilnehmereinrichtung an der mindestens einen Sekundärzelle; und
Mittel zum Weiterleiten von Paketen zur Zielprimärzelle.

3. Netzwerkknoten nach Anspruch 1 oder 2, wobei die Primärzellenübergabe über Frequenzbereich 1 durchgeführt wird, während die Datenverbindung über Frequenzbereich 2 gehalten wird, oder wobei die Primärzellenübergabe über Frequenzbereich 2 durchgeführt wird, während die Datenverbindung über Frequenzbereich 1 gehalten wird.

4. Netzwerkknoten nach einem der vorhergehenden Ansprüche,
wobei der Teilnehmereinrichtung gleichzeitig mehrere temporäre Mobilfunknetzwerkkennungen zugeteilt sind und der Netzwerkknoten Mittel zum Informieren der Zielprimärzelle über die mehreren temporären Mobilfunknetzwerkkennungen umfasst, oder
wobei der Teilnehmereinrichtung eine aktive temporäre Mobilfunknetzwerkkennung zugeteilt ist und der Netzwerkknoten Mittel zum Bereitstellen einer Bestätigung für die Zielprimärzelle darüber umfasst, dass eine Kommunikation zwischen der Sekundärzelle und der Teilnehmereinrichtung beendet ist.

5. Netzwerkknoten nach einem der vorhergehenden Ansprüche, der Mittel zum temporären Aufheben von Einschränkungen für die Zuordnung von logischen Kanälen, bis die Primärzellenübergabe abgeschlossen ist, umfasst.

6. Netzwerkknoten nach einem der vorhergehenden Ansprüche, der Mittel zum Durchführen von mindestens einem von Folgendem an der mindestens einen Sekundärzelle umfasst: erhöhte Übertragungsleistung, robustere Modulations- und Codierschemaauswahl, Aktivieren einer blinden Wiederholung oder Aktivieren einer Paketdatenkonvergenzprotokollduplizierung.

7. Verfahren das von einem Netzwerkknoten durchgeführt wird, wobei das Verfahren Folgendes umfasst:
Bereitstellen einer Primärzelle und mindestens einer Sekundärzelle für eine Datenübertragung mit Trägeraggregation;
Auslegen der mindestens einen Sekundärzelle zum Verwenden sowohl eines physischen Downlinksteuerkanals als auch eines physischen Uplinksteuerkanals vor einer Primärzellenübergabe;
Planen einer Downlinkübertragung und einer Uplinkübertragung über die mindestens eine Sekundärzelle unter Verwendung des physischen Downlinksteuerkanals und des physischen Uplinksteuerkanals, wenn Bedingungen für die Primärzellenübergabe erfüllt sind; und
Informieren einer Teilnehmereinrichtung während der Primärzellenübergabe darüber, dass die mindestens eine Sekundärzelle für eine Benutzerebenendatenkommunikation zu verwenden ist, wobei die Benutzerebenendatenkommunikation mit der mindestens einen Sekundärzelle während der Primärzellenübergabe aufrechterhalten wird.

8. Verfahren nach Anspruch 7, das ferner Folgendes umfasst:
Empfangen einer Bestätigung, dass die Primärzellenübergabe abgeschlossen ist, von einer Zielprimärzelle;
Informieren der mindestens einen Sekundärzelle darüber, dass sich die Teilnehmereinrichtung erfolgreich mit der Zielprimärzelle verbunden hat;
Beenden einer Übertragung von Daten zur Teilnehmereinrichtung oder eines Empfangs von Daten von der Teilnehmereinrichtung an der mindestens einen Sekundärzelle; und
Weiterleiten von Paketen zur Zielprimärzelle.

9. Verfahren nach Anspruch 7 oder 8, wobei die Primärzellenübergabe über Frequenzbereich 1 durchgeführt wird, während die Datenverbindung über Frequenzbereich 2 gehalten wird, oder wobei die Primärzellenübergabe über Frequenzbereich 2 durchgeführt wird, während die Datenverbindung über Frequenzbereich 1 gehalten wird.

10. Verfahren nach einem der Ansprüche 7 bis 9,
wobei der Teilnehmereinrichtung gleichzeitig mehrere temporäre Mobilfunknetzwerkkennungen zugeteilt sind und das Verfahren das Informieren der Zielprimärzelle über die mehreren temporären Mobilfunknetzwerkkennungen umfasst, oder
wobei der Teilnehmereinrichtung eine aktive temporäre Mobilfunknetzwerkkennung zugeteilt ist und das Verfahren das Bereitstellen einer Bestätigung für die Zielprimärzelle darüber umfasst, dass eine Kommunikation zwischen der Sekundärzelle und der Teilnehmereinrichtung beendet ist.

11. Verfahren nach einem der Ansprüche 7 bis 10, das das temporäre Aufheben von Einschränkungen für die Zuordnung von logischen Kanälen, bis die Primärzellenübergabe abgeschlossen ist, umfasst.

12. Verfahren nach einem der Ansprüche 7 bis 11, das das Durchführen von mindestens einem von Folgendem an der Sekundärzelle umfasst: erhöhte Übertragungsleistung, robustere Modulations- und Codierschemaauswahl, Aktivieren einer blinden Wiederholung oder Aktivieren einer Paketdatenkonvergenzprotokollduplizierung.

## Revendications

1. Nœud de réseau, comprenant :
des moyens pour fournir une cellule primaire et au moins une cellule secondaire pour la transmission de données avec agrégation de porteuses ;
des moyens pour configurer, avant un transfert de cellule primaire, l'au moins une cellule secondaire pour utiliser à la fois le canal physique de contrôle descendant et le canal physique de contrôle montant ;
des moyens pour planifier, lorsque les conditions pour le transfert de cellule primaire sont remplies, une transmission descendante et une transmission montante sur l'au moins une cellule secondaire à l'aide du canal physique de contrôle descendant et du canal physique de contrôle montant ; et
des moyens pour informer un équipement utilisateur, pendant le transfert de cellule primaire, de l'au moins une cellule secondaire à utiliser pour la communication de données de plan utilisateur, dans lequel la communication de données de plan utilisateur avec l'au moins une cellule secondaire est maintenue pendant le transfert de cellule primaire.

2. Nœud de réseau selon la revendication 1, comprenant en outre :
des moyens pour recevoir une confirmation que le transfert de cellule primaire est terminé d'une cellule primaire cible ;
des moyens pour informer l'au moins une cellule secondaire que l'équipement utilisateur s'est connecté avec succès à la cellule primaire cible ;
des moyens pour arrêter, au niveau de l'au moins une cellule secondaire, la transmission de données à l'équipement utilisateur ou la réception de données provenant de l'équipement utilisateur ; et
des moyens pour réacheminer des paquets à la cellule primaire cible.

3. Nœud de réseau selon la revendications 1 ou 2, dans lequel le transfert de cellule primaire est réalisé sur la plage de fréquences 1 tout en maintenant la connexion de données sur la plage de fréquences 2, ou dans lequel le transfert de cellule primaire est réalisé sur la plage de fréquences 2 tout en maintenant la connexion de données sur la plage de fréquences 1.

4. Nœud de réseau selon une quelconque revendication précédente,
dans lequel de multiples identifiants temporaires de réseau radio cellulaire sont simultanément alloués à l'équipement utilisateur, et le nœud de réseau comprend des moyens pour informer la cellule primaire cible des multiples identifiants temporaires de réseau radio cellulaire, ou
dans lequel un identifiant temporaire de réseau radio cellulaire actif est alloué à l'équipement utilisateur, et le nœud de réseau comprend des moyens pour fournir une confirmation à la cellule primaire cible que la communication entre la cellule secondaire et l'équipement utilisateur a cessé.

5. Nœud de réseau selon une quelconque revendication précédente, comprenant des moyens pour lever temporairement des restrictions de mappage de canal logique jusqu'à ce que le transfert de cellule primaire soit terminé.

6. Nœud de réseau selon une quelconque revendication précédente, comprenant des moyens pour réaliser, au niveau de l'au moins une cellule secondaire, au moins une de : une puissance de transmission accrue, une sélection de schéma de modulation et de codage plus robuste, une activation de répétition aveugle, ou une activation de duplication de protocole de convergence de données en mode paquet.

7. Procédé mis en œuvre par un nœud de réseau, le procédé comprenant :
la fourniture d'une cellule primaire et d'au moins une cellule secondaire pour la transmission de données avec agrégation de porteuses ;
la configuration, avant un transfert de cellule primaire, de l'au moins une cellule secondaire pour utiliser à la fois le canal physique de contrôle descendant et le canal physique de contrôle montant ;
la planification, lorsque les conditions pour le transfert de cellule primaire sont remplies, d'une transmission descendante et d'une transmission montante sur l'au moins une cellule secondaire à l'aide du canal physique de contrôle descendant et du canal physique de contrôle montant ; et
le fait d'informer un équipement utilisateur, pendant le transfert de cellule primaire, de l'au moins une cellule secondaire à utiliser pour la communication de données de plan utilisateur, dans lequel la communication de données de plan utilisateur avec l'au moins une cellule secondaire est maintenue pendant le transfert de cellule primaire.

8. Procédé selon la revendication 7, comprenant en outre :
la réception de la confirmation que le transfert de cellule primaire est terminé d'une cellule primaire cible ;
le fait d'informer l'au moins une cellule secondaire que l'équipement utilisateur s'est connecté avec succès à la cellule primaire cible ;
l'arrêt, au niveau de l'au moins une cellule secondaire, de la transmission de données à l'équipement utilisateur ou de la réception de données de l'équipement utilisateur ; et
le réacheminement de paquets à la cellule primaire cible.

9. Procédé selon les revendications 7 ou 8, dans lequel le transfert de cellule primaire est réalisé sur la plage de fréquences 1 tout en maintenant la connexion de données sur la plage de fréquences 2, ou dans lequel le transfert de cellule primaire est réalisé sur la plage de fréquences 2 tout en maintenant la connexion de données sur la plage de fréquences 1.

10. Procédé selon l'une quelconque des revendications 7 à 9,
dans lequel de multiples identifiants temporaires de réseau radio cellulaire sont simultanément alloués à l'équipement utilisateur, et le procédé comprend le fait d'informer la cellule primaire cible des multiples identifiants temporaires de réseau radio cellulaire, ou
dans lequel un identifiant temporaire de réseau radio cellulaire actif est alloué à l'équipement utilisateur, et le procédé comprend la fourniture d'une confirmation à la cellule primaire cible que la communication entre la cellule secondaire et l'équipement utilisateur a cessé.

11. Procédé selon l'une quelconque des revendications 7 à 10, comprenant le levage temporaire des restrictions de mappage de canal logique jusqu'à ce que le transfert de cellule primaire soit terminé.

12. Procédé selon l'une quelconque des revendications 7 à 11, comprenant la réalisation, au niveau de la cellule secondaire, au moins une de : une puissance de transmission accrue, une sélection de schéma de modulation et de codage plus robuste, une activation de répétition aveugle, ou une activation de duplication de protocole de convergence de données en mode paquet.
